(19)

Europäisches
Patentamt
European
Patent Office
Office européen
des brevets

(11) **EP 2 180 692 A1**

(12) **EUROPEAN PATENT APPLICATION**

(43) Date of publication:
**28.04.2010 Bulletin 2010/17**

(51) Int Cl.:
*H04N 5/235* (2006.01)    *G06T 5/50* (2006.01)

(21) Application number: **08305710.9**

(22) Date of filing: **22.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **STWireless SA**
**1228 Geneve (CH)**

(72) Inventor: **Valente, Stéphane**
**75003 Paris (FR)**

(74) Representative: **Zapalowicz, Francis**
**Casalonga & Partners**
**Bayerstrasse 71/73**
**80335 München (DE)**

(54) **Method of and a device for producing a digital picture**

(57)    A method of producing a digital picture of a scene comprises the steps of generating (II) simultaneously a first overexposed picture of said scene and a second underexposed picture of said scene and reconstructing (III) a single picture of said scene based on the two simultaneously generated pictures, such that the reconstructed picture shows a high dynamic range.

FIG. 1

EP 2 180 692 A1

## Description

The invention relates to the production of a digital picture of a scene, in particular to a method of and device for producing a digital picture of a scene.

In particular the present invention relates to the field of high dynamic range (HDR) imaging (HDRI). In image processing, computer graphics and photography, HDRI is a set of techniques that allows a greater dynamic range of exposure (the range for values between light and dark areas) than normal digital imaging techniques. The intention of HDRI is to accurately represent the wide range of the intensity levels found in real scenes ranging from direct sunlight to shadow.

A part of this set of techniques is to combine several different images to produce a single HDR image. Typically a set of photographs needs to be taken, each being taken with individual but different exposure setting. After having taken the set of photographs, a desktop software is used for creating an HDR image. Using the software for applying a composite or merging technique that utilizes the set of taken pictures as an input allows to overcome the exposure range limitation of traditional single shot photography in order to create a picture that shows much more details from shadow to highlights and everywhere in between. This composite technique is different from the production or generation of an image from a single exposure of a sensor that has a native high dynamic range. In order to create the set of pictures modem cameras nowadays provide a feature commonly termed "auto bracketing". "Bracketing" is a technique used to take a series of images of the same scene at a variety of different exposures that "bracket" the metered exposure or manual exposure. "Auto" simply means that the camera will automatically take these exposures as a burst of 2, 3 or 5 frames with exposure settings in a range. This can be useful if the user of the camera is not exactly sure how the shot will turn out or is worried that the scene has a dynamic range which is wider than the camera can capture. On a digital camera this can also be used to combine under- and overexposed images with each other in order to produce an image that could only have been taken if the camera had the same dynamic range as the scene itself. As a fact the exposure bracketing is based on the concept of a single fixed camera placed on a tripod that takes the set of temporally successive (consecutive) pictures with different exposure settings, the exposure settings are ranging from underexposed (offering good spatial details in the brightest part of the picture) to overexpose (offering goods spatial details in the darkest areas of the picture).

Similar to still picture processing also in HDR video processing a set of pictures - or in video terminology a set of frames - captured consecutively is used to be merged into an HDR image. For example, US 7,010,174 B2 describes a system and process for generating HDR videos, which involved first capturing a video image sequence while varying the exposure in a way to alternate between frames having a shorter and longer exposure. The exposure for each frame is set prior to it being captured as a function of the pixel brightness distribution in preceding frames. Next, for each frame of the video, the corresponding pixels in the frame under consideration and in the preceding and subsequent frame are identified. For each corresponding pixel set, at least one pixel is identified as representing a trustworthy pixel. The pixel color information associated with the trustworthy pixel is then employed to compute a radiance value for each pixel set to form the radiance map. A tone mapping procedure can then be performed to convert the radiance map into 8-bit representation of the HDR frame.

In general, information stored in HDR images usually corresponds to the physical values of luminance or radiance that can be observed in the real world. This is different from traditional digital images, which represent colors that should appear on a monitor or a paper print. Therefore, HDR image formats are often called "scene-referred", in contrast to traditional digital images, which are "device-referred" or "output-referred". Furthermore, in "device-referred" or "output-referred" images, the values stored for the pixels do not represent relative or absolute values of radiance or luminance, since they include a non-linear correction called "gamma-correction" to make up for the non-linear response of cathode-ray tube displays. The values stored for HDR images are often linear, which means that they represent relative or absolute values of radiance or luminance. Typically HDR images require a higher number of bits per color channel than traditional images, both because of the linear encoding and because they need to represent values from $10^{-4}$ to $10^8$ (the range of visible luminance values) or more. 16-bit ("half precision") or 32-bit floating-point numbers are often used to represent HDR pixels. However, when the appropriate transfer function is used, HDR pixels for some applications can be represented with as few as 10 to 12 bits for luminance and 8 bits for luminance without introducing any visible quantization artifacts.

One of the drawbacks of the present concept of producing HDR images is the fact that the sequence of pictures, each with individual exposure settings, is taken consecutively by the same camera. Therefore, a tripod and a scene with no moving objects are required. Otherwise it may be impossible to proper merge the different pictures, because they do not depict the same content.

The use of high dynamic range sensors would certainly be a way of circumventing this problem in digital still picture photography. However, the tendency in digital still picture photography is the use of smaller and even smaller sensors which provide only a low dynamic range and which are not able to correctly reproduce scenes that have both very dark and very bright areas. The dark areas typically lack details and are impaired by high noise levels. The bright areas typically lack details too as the signal delivered by the sensors saturates.

According to an embodiment it is proposed an improved method of producing an HDR image and a device making use of such an improved method.

According to an aspect a method of producing a digital picture of a scene is proposed which comprises generating simultaneously a first overexposed picture of said scene and a second underexposed picture of said scene, and reconstructing a single picture of said scene based on the two simultaneously generated pictures, such that the reconstructed picture shows a high dynamic range.

According to another aspect, a device for producing a digital picture of a scene is proposed, which comprises an acquisition stage for generating a first overexposed picture of said scene and for generating simultaneously to the generation of the first overexposed picture a second underexposed picture of said scene, and a reconstruction stage for reconstructing a single picture of said scene out of the two simultaneously generated pictures, such that the reconstructed picture shows a high dynamic range.

It is thus provided in particular the advantage that even in relatively cheap camera devices, like camera phones or digital still cameras or even motion picture cameras like digital camcorders, which make use of relatively cheap low dynamic range sensors, HDR pictures can be produced without the use of any tripod or the like. In addition, creating HDR videos is possible without the need of any high speed processors that process sequences of high resolution pictures or frames in real time. As a consequence the requirements or constraints in terms of memory size, bandwidth and processing power are relaxed for such devices. For the avoidance of doubt the term "generating an underexposed picture and an overexposed picture" shall be understood as taking a set of still pictures (e.g. two or more) with varying degrees of exposition (one of the pictures being more exposed than the other picture in the case of two pictures). This set of taken pictures can be used for producing a HDR still picture or can be used to produce or serve as a basis for a frame or a picture of a HDR video. Consequently - in dependency on the application of the invention - the term "device for producing a digital picture" indicates a still picture device or a motion picture device, in which the measures according to the invention are applied.

According to an embodiment the step of reconstructing comprises merging a representation of the two simultaneously generated pictures. In order to achieve a HRD picture this step may be realized by various techniques known in the art. However, its application in the field of low-cost cameras has so far not been feasible because typically this step has been performed by means of powerful computers in an off-line fashion consecutive to the production of a sequence of pictures. Given the innovative concept of the invention this measure is now also applicable in the field of low cost cameras which only have limited processing power. In addition the provision of this feature further provides the advantage that the memory demand or system performance requirements of a camera may be kept on a reasonable level. It is no longer necessary to store a vast amount of data, which would be the case for cameras operating according to the exposure bracketing principle that requires rapidly taking consecutive pictures while quickly adapting the exposure setting for each picture, storing all the data of each individually produced picture for subsequent post-processing. In contrast the invention in fact allows for example the design of low-cost cameras that are able to produce HDR images.

According to another embodiment the step of generating comprises using identical exposure times for both acquired pictures. This in fact enables a design, which allows modifying the properties of the incoming light by optical measures introduced into the optical path of a camera. Hence these optical measures achieve different intensity of the incoming light received by the sensors of a camera, so that the production of the overexposed picture and the underexposed picture is based on these optical measures introduced in the optical path or in the respective paths or path of rays for each picture.

According to an embodiment the optical measures for changing the intensity of the light in the optical path(s) may be provided by various known techniques. However, in particular, the step of generating may comprise a filtering of the incoming light of the second picture by means of a neutral density filter. In particular a neutral gray filter may be applied. This solution allows for example keeping the design of a camera on a very reasonable level because such neutral filters are easily available and relatively cheap. Also the design of the camera in terms of managing the exposure setting can be kept relatively simple because only one (identical) setting for both pictures is necessary.

For each picture taken simultaneously a separate path of light may be provided. However, according to a particular embodiment of the invention the step of generating comprises splitting the incoming light into a first fraction of x% of the incoming light and a second fraction of y% of the incoming light, wherein x% > y%, and using the first fraction of x% of the incoming light for the first overexposed picture and the second fraction of y% of the incoming light for the second underexposed picture. This allows for example operating the camera with only one optical system, hence allowing a design similar to today's cameras in use and also enabling nowadays-available equipment for such cameras to be used. The individual fraction to be used for each picture to be generated may vary from case to case. In a possible scenario a difference of 20% between the individual fractions of x% and y% set will serve as a good basis for generating an underexposed picture as well as an overexposed picture. However, dependent on the electronic system used, e.g. the sensors and the like, also a difference in range down to 1% or up to 90% or even more may be feasible.

In an embodiment the step of reconstructing comprises spatial registering the generated first and second picture before merging the two spatial registered pictures. This is of advantage in a scenario in which the camera comprises a number of sensors, e.g. two sensors, for generating the underexposed and the overexposed picture based on individual light paths. Typically these sensors will see the scene in a stereoscopic view because of the distance between the sensors. Hence the pixels of the individual pictures taken do not represent identical physical locations of the scene. This can be compensated by spatial registering of the pictures taken. But also in embodiments making use of a common incoming light path spatial registering may be applicable or even necessary. Such a situation may be given by applying sensors with different spatial resolution.

In a design in which virtually identical optical measures are applied for the individual paths of light for each picture to be taken is of advantage if the step of generating comprises using different exposure times for the first overexposed picture and the second underexposed picture. Consequently the electronics of the camera or the design of the sensors applied will serve as basis for generating the overexposed and underexposed picture. In a preferred embodiment setting different exposure times may serve for this purpose. But also having set different sensitivity for the sensors applied or even using sensors designed for different sensitivities may achieve the same result. With regard to the electronics of the camera or a sensor module, this may as well be achieved by using an amplifier used in the signal processing of the signals generated by the sensors. Hence, changing the amplification of this amplifier will lead to different sensitivity settings.

In situations in which it is guaranteed that the simultaneously taken pictures, which were taken in a stereoscopic fashion, represent the same temporal situation in the scene only a spatial registration is necessary. In another embodiment, in which for example different exposure times are used to generate the overexposed and the underexposed picture, it is of advantage if the step of reconstructing comprises spatial registering of the two simultaneously generated pictures and temporal registering of the two spatial registered pictures before merging the two spatial and temporal registered pictures. This guarantees that the content of the pictures is not only matched in terms of spatial relationship but also in terms of temporal relationship.

Other advantages and features of the invention will appear on examining the detailed description of embodiments, these being in no way limiting and of the appended drawings in which:

Fig. 1 shows a first embodiment of a device according to the invention,
Fig. 2 shows a second embodiment of a device depicted in Fig. 1,
Fig. 3 shows a third embodiment of the device depicted in Fig. 1 and
Fig. 4 shows an embodiment of a method according to the invention.

In the drawings, like numbers refer to like objects throughout. Objects in the diagrams are not necessarily drawn to scale.

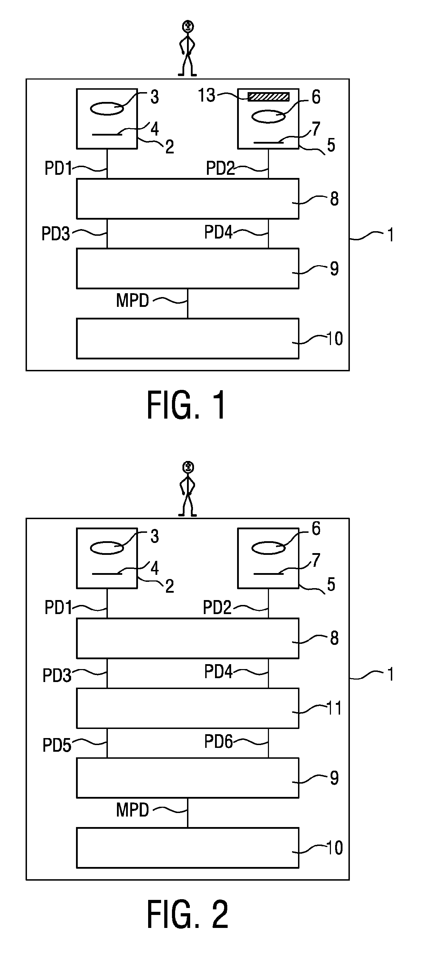

Fig. 1 shows a device 1 for producing a digital picture of a scene. The device 1 comprises an acquisition stage for capturing or in other words generating or taking a first overexposed picture of said scene and for generating simultaneously to the generation of the first overexposed picture a second underexposed picture of said scene. The acquisition stage is realized by a first sensing device 2, which comprises a first lens 3 and a first sensor 4. Incoming light that represents the scene is projected by the aid of the lens 3 onto the first sensor 4. In addition the acquisition stage further comprises a second sensing device 5, which comprises a second lens 6 and a second sensor 7. In analogy to the first sensing device 2 the incoming light that represents said scene is projected by the aid of the lens 6 onto the second sensor 7. Both sensing devices 2 and 5 are facing the same scene and have identical exposure times set for both sensors 4 and 7. The exposure time is set in such a way that the first sensing device 2 creates first picture data PD1, which represents the first overexposed picture. In order to create the second underexposed picture the second sensing device 5 further comprises a neutral density filter 13 located in front of the second lens 6. The filter properties are selected in such a way that with given characteristics of the second sensor 7 the second sensor 7 will take an underexposed picture. This alignment between the filter properties and the properties of the second sensor 7 allows the second sensing device 5 to produce second picture data PD2, which create the second underexposed picture. The device 1 further comprises a spatial registration unit 8 located downstream to the two sensing devices 2 and 5, and a pixel merging unit 9, which follows in terms of the sequence of data processing steps the spatial registration unit 8. Finally a display unit and / or storage memory 10 is provided downstream to the pixel merging unit 9.

The spatial registration unit 8 is designed to receive the first picture data PD1 and the second picture data PD2 and to spatial register the represented first and second picture and to create and to forward third picture data PD3, which represent the spatial registered first picture, and fourth picture data PD4, which represent the spatial registered second picture.

The picture merging unit 9 is designed to receive the third picture data PD3 and the fourth picture data PD4 and to merge the two spatial registered pictures in order to create merged picture data MPD which represent the reconstructed high dynamic range (HDR) picture which in turn is displayed and / or stored - as the case may be - by the display unit or storage memory 10.

Because of the fact that the first sensing device 2 and the second sensing device 5 have a stereoscopic view on the scene, which means that they are typically placed e.g. a few centimeters apart from each other, the spatial registration unit 8 is necessary. Given the geometric situation the first sensing device 2 and the second sensing device 5 see the scene from slightly different points of view. This situation is similar to a design, in which the first sensor 4 and / or the second sensor 7 have different spatial resolutions and therefore their pixels do not in general point to the same physical location in the real scene. Therefore it is necessary to find the correct pair of coordinates in the first picture data PD1 and in the second picture PD2 for every pixel to be reconstructed. This is what the spatial registration unit 8 basically performs. It maps the coordinates of one picture to the other picture to compensate for spatial differences. This can be achieved with block matching techniques that match areas from one picture to the area in the other picture, but also other known techniques may be applied.

The function of the pixel merging unit 9 can be explained as follows on a very holistic or conceptual level, but it is to mention that other more complicated and sophisticated implementations may be considered as the case may be. The pixel merging unit 9 basically merges a data representation of the intensity of the pixels of the overexposed picture with a data representation of the intensity of the corresponding pixel in the underexposed picture. As an example, it is assumed that a pixel intensity $I1(x1,y1)$ at location $(x1,y1)$ in the underexposed picture and a pixel intensity $I2(x2,y2)$ at location $(x2,y2)$ in the overexposed picture is given. Both pixel intensities $I1(x1,y1)$ and $I2(x2, y2)$ correspond to the same physical object location in the real scene that will be rendered to location $(x,y)$ in the merged picture. The merging may be performed for example by a linear combination as defined by the following equation that defines the final intensity $I(x,y)$ at location $(x,y)$ of the real scene:

$$I(x,y) = (W1 * I1(x1,y1) + W2 * I2(x2,y2)) \div (W1 + W2)$$

where W1 and W2 are weighting factors that depend on $I1(x1,y1)$ and $I2(x2,y2)$. A possible selection of the weighting factors would be for instance

$$W1 = I1(x1,y1) - 0$$

and

$$W2 = 255 - I2(x2,y2)$$

by assuming that the values 0 and 255 represent the minimum and maximum intensity of a pixel. For this example it is assumed that a dark area of a real scene undergoes the merging process. For this real scene $I1(x1,y1)$ will represent a darkness and its value will be close to zero. For this real scene $I2(x2,y2)$ will represent medium tones. Consequently W1 will amount to a relatively small value and W2 will amount to a relatively large value. The merged pixel intensity $I(x, y)$ will therefore effectively receive more information from $I2(x2,y2)$ than from $I1(x1,y1)$. On the contrary, if a bright area of the real scene undergoes the merging process, $I1(x1,y1)$ will represent medium tones and $I2(x2,y2)$ will represent very bright tones or in other words its value will be close to the value of 255. Therefore, W1 will amount to a value larger than the value given to W2. The merged pixel intensity $I(x,y)$ will therefore receive more information from the underexposed picture than from the overexposed picture.

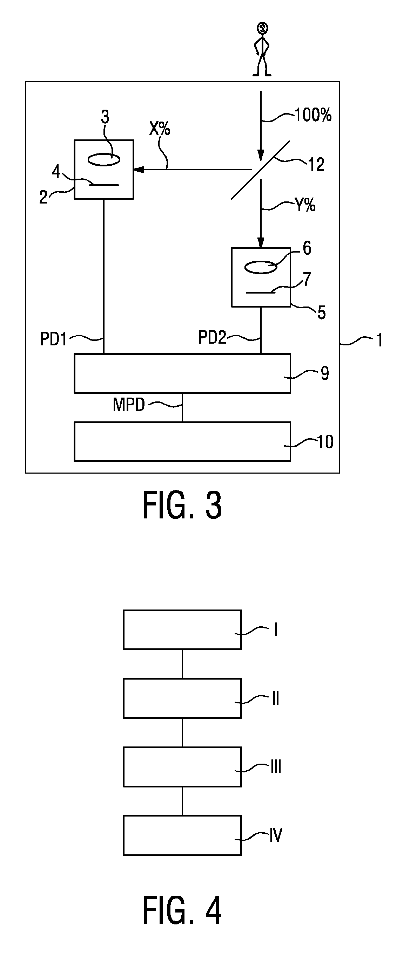

The design of the device 1 according to Fig. 1 allows the execution of an embodiment of the method of producing a digital picture of a scene according to the invention. A first embodiment of this method is explained below in conjunction with Fig. 4. The method starts in a block I. This method comprises the step of generating (block II) simultaneously a first overexposed picture of said scene and a second underexposed picture of said scene. The method further comprises the step of reconstructing (block III) a single picture of said scene out of the two simultaneously generated pictures, such that the reconstructed picture shows a high dynamic range. The method ends in a block IV, which is related to the storing and / or displaying or otherwise further processing of the reconstructed HDR picture.

Details of the method according to the first embodiment are now elaborated. In particular, according to the first embodiment the step of generating comprises using identical exposure times or settings for both pictures. The step of generating comprises using the incoming light directly for generating the first overexposed picture. Further to this, the step for generating comprises filtering the incoming light for generating the second picture by means of a neutral density filter. Given the fact of the stereoscopic view on the scene of the first sensing device 2 and the second sensing device 5, the step of reconstructing necessitates spatial registering the acquired first and second picture before merging the two spatial registered pictures. Finally the step of reconstructing comprises merging the two acquired pictures to reconstruct the HDR picture.

In contrast to the device shown in Fig. 1 the device in Fig. 2 does not use a neutral density filter 13 in front of any of its lenses 3 or 6 of the sensing devices 2 and 5. However, different exposure times are set for the sensors 4 and 7, which are set such that sensing the incoming light leads to the first picture data PD1 representing the overexposed picture and the second picture data PD2 representing the underexposed picture. Taking into account the stereoscopic view that implies that the pixel intensity I1(x1,y1) and I2(x2,y2) of the simultaneously taken pictures does not in general point to or relate to the same physical location (x,y) in the real scene, some registering steps are necessary in order to compensate this offset. In a first registration step the spatial registration as explained in the context of Figure 1 is performed. Given the additional fact that the first sensor 4 and the second sensor 7 have slightly different exposure times, and the camera and/or the object in the scene is/are moving during the picture acquisition, the objects do not have the same location in the simultaneously taken overexposed and underexposed picture due to motion, or may have different degrees of motion blur. In order to compensate for this effect the device 1 comprises a temporal registration unit 11, which is located between the spatial registration unit 8 and the pixel merging unit 9. The temporal registration unit 11 is designed to receive the third picture data PD3 and the fourth picture data PD4 and to perform the temporal registration, which is the process of finding the right pairs of coordinates (x1,y1) and (x2,y2) in the pixels of the spatial registered first picture and the spatial registered second picture for every reconstructed pixel to compensate for the temporal differences introduced as explained above. Again the technique of block oriented matching may be applied. On the other hand, also other methods known as motion estimation/compensation may be applied, because their purposes are to compensate some motion.

The temporal registration unit 11 creates a result of the temporal registration process fifth picture data PD5, which represent the spatial and temporal registered first overexposed picture, and sixth picture data PD6, which represent the spatial and temporal registered second underexposed picture. The fifth picture data PD5 and a sixth picture data PD6 are sent to the pixel merging unit 9 which in turn creates the merged picture data MDP out of the received picture data PD5 and PD6 as explained according to the preceding embodiment.

The design of the device 1 according to Fig. 2 allows realizing a slightly modified second embodiment of the method according to the invention. According to the second embodiment the method is differentiated from the method according to the first embodiment in that the step of generating comprises using different exposure times for the generation of the first overexposed picture and the second underexposed picture. Caused by the geometric situation of the sensing devices 2 and 5 and the exposure settings there is a different spatial and temporal relationship between the two pictures generated simultaneously by the two sensing devices 2 and 5. The method according to the invention copes with this fact by comprising in the step of reconstructing a spatial registering of the first and second picture and a temporal registering of the spatial registered first and second picture before merging the two spatial and temporal registered pictures in order to produce the reconstructed HDR picture by merging the spatial and temporal registered pictures.

In Fig. 3 a third embodiment is shown, in which the registration unit 8 and the temporal registration unit 11 used in the first and the second embodiment are avoided. In contrast to the two preceding embodiments the incoming light representing the scene is split in a splitting unit 12, which is realized in the present case by a semi-reflective mirror. It allows reflecting a fraction of x% of the incoming light, which in the present case is 60% of the incoming light, into the first sensing device 2 and transmitting a fraction of y% of the incoming light, which in the present case is 40% of the incoming light, into the second sensing device 5. The first sensor 3 and the second sensor 6 are set to identical exposure times and have the same optical properties. Given the different fraction of light received by the two sensors 4 and 7, the first sensing device 2 creates the first picture data PD1, which represent the overexposed picture, and the second sensing device 5 generates the second picture data PD2, which represent the underexposed picture.

The third embodiment shows a relatively simple design in contrast to the first and the second embodiment. This simple design is achieved by the inside that a semi-reflective mirror that splits the incoming light between the sensing devices 2 and 5 allows the two sensing devices, which are assumed to have the same resolution, to see the same scene from the same point of view with the same resolution. Consequently it can be assumed that the respective pixel intensities I1(x/y) and I2(x/y) correspond to the same physical objects and therefore no spatial registration is necessary. In addition, considering the fact that the sensing devices 2 and 5 operate with identical exposure times, there is no need for any temporal registration before merging the picture data PD1 and PD2 received from the sensing device 2 and 5.

In comparison to the first embodiment shown in Fig. 1 the semi-reflective mirror used in Fig. 3 acts like the neutral density filter 13 shown in Fig. 1, but in contrast to this neutral filter it allows realizing the relatively simple design of the device 1.

Based on the design of the device 1 according to Fig. 3 the method according to the invention is implemented by means of a third embodiment of this method, in which the step of generating comprises splitting the incoming light into a first fraction of x% and a second fraction of y%, wherein x% > y%, and using the fraction of x% of the incoming light for generating the first overexposed picture and the second fraction of y % of the incoming light for generating the second underexposed picture. The method according to the third embodiment does not necessitate the step of spatial registering the pictures or temporal registering the pictures, because both sensing devices 2 and 5 see the same scene in an identical temporal and spatial relationship.

The mere fact that in the above described embodiments only two sensing devices 2 and 5 per device 1 are depicted and explained shall not construe any limitation in terms of the number of sensing devices applied in realizations of the inventions. Accordingly also more than two sensing devices may be provided, which serve for sensing the incoming light according to its individual setting. For example, in the context of the first embodiment in total five sensing devices with identical exposure times of the sensors may be used and four of these sensing devices may be equipped with density filters having different filter properties in order to allow each sensing devices to generate a picture having its individual exposure characteristics, e.g. ranging from strongly underexposed until heavily overexposed.

Also the concept disclosed in the context of the third embodiment may be realized by means of a larger number than two sensing devices, wherein each of them has an individual exposure time set that is different from the exposure times set for the other sensing devices.

The same remark is basically also true for the third embodiment, in which a desired number of sensing devices with identical exposure settings may be used. The incoming light that is reflected on the surface of the first semi-reflective mirror, will be split in terms of intensity by the next semi-reflective mirror of a chain of semi-reflective mirrors. Consequently all of the sensing devices will face the scene under observation through at least one of the semi-reflective mirrors. The sensing devices will receive less and less intensity along the chain of semi-reflective mirrors, which in turn will lead to a drop of intensity received by the sensing devices further downstream of the chain of sensing devices. This results in a number of simultaneously taken pictures showing exposure properties in the range between overexposed and underexposed.

The invention may also be realized by a computer program product. The computer program product comprises executable program portions, which when loaded in a programmable device e.g. a camera comprising a central processing unit, and executed in said programmable device allows the programmable device to realize the method according to the invention. The computer program product may be delivered on a data carrier like a Compact Disc (CD), a Digital Versatile Disk (DVD) or other types of optical storage means or by means of a solid state or hard disk drive storage device.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

**Claims**

1. A method of producing a digital picture of a scene, the method comprising:

   generating (II) simultaneously a first overexposed picture of said scene and a second underexposed picture of said scene, and reconstructing (III) a single picture of said scene based on the two simultaneously generated pictures, such that the reconstructed picture shows a high dynamic range.

2. A method according to claim 1, wherein the step of reconstructing (III) comprises merging a representation of the two simultaneously generated pictures.

3. A method according to any of the preceding claims, wherein the step of generating (II) comprises using identical exposure times for both acquired pictures.

4. A method according to claim 3, wherein the step of generating (II) comprises filtering the incoming light of the second picture by means of a neutral filter.

5. A method according to claim 3, wherein the step of generating (II) comprising splitting the incoming light into a first fraction of x% of the incoming light and a second fraction of y% of the incoming light, wherein x% > y%, and using the first fraction of x% of the incoming light for the first overexposed picture and the second fraction of y% of the incoming light for the second underexposed picture.

**6.** A method according to claim 4 or 5, wherein the step of reconstructing (III) comprises spatial registering the generated first and second picture before merging the two spatial registered pictures.

**7.** A method according to claim 1 or claim 2, wherein the step of generating (II) comprises using different exposure times for the first overexposed picture and the second underexposed picture.

**8.** A method according to claim 7, wherein the step of reconstructing (III) comprises spatial registering the two simultaneously generated pictures and temporal registering the two spatial registered pictures before merging the two spatial and temporal registered pictures.

**9.** A device (1) for producing a digital picture of a scene, the device comprises an acquisition stage for generating a first overexposed picture of said scene and for generating simultaneously to the generation of the first overexposed picture a second underexposed picture of said scene, and a reconstruction stage for reconstructing a single picture of said scene out of the two simultaneously generated pictures, such that the reconstructed picture shows a high dynamic range.

**10.** A device (1) according to claim 9, wherein the reconstruction stage comprises a merging unit (10) for merging a representation of the two simultaneously generated picture data.

**11.** A device (1) according to any of the preceding claims, wherein the acquisition stage comprises a first sensing device (2) that is designed to sense incoming light to produce first picture data (PD1) that represent the first overexposed picture and a second sensing device (5) that is designed to sense incoming light and to produce second picture data (PD2) that represent the second underexposed picture, wherein for both sensing devices (2, 5) identical exposure times are set.

**12.** A device (1) according to claim 11, wherein the second sensing device (5) comprises a neutral filter (13) for filtering the incoming light to be sensed for generating the second underexposed picture.

**13.** A device (1) according to claim 11, wherein the device (1) comprises a splitting unit (12) that is designed for splitting the incoming light into a first fraction of x% of the incoming light and a second fraction of y% of the incoming light, wherein x% > y%, and the first sensing device (2) is arranged to sense the first fraction of x% of the incoming light in order to generate the first overexposed picture and the second sensing device (5) is arranged to sense the second fraction of y% of the light in order to create the second underexposed picture.

**14.** A device (1) according to claim 12 or 13, wherein the reconstruction stage comprises a spatial registration unit (8) for spatial registering the simultaneously generated first and second picture before merging the two spatial registered pictures by the aid of the merging unit (9).

**15.** A device (1) according to claim 9 or claim 10, wherein the acquisition stage comprises a first sensing device (2) that is designed to sense the incoming light and to produce first picture data (PD1) that represent the first overexposed picture and a second sensing device (5) that is designed to sense incoming light and to produce second picture data (PD2) that represent the second underexposed picture, wherein for both sensing devices (2, 5) different exposure times are set.

**16.** A device (1) according to claim 15, wherein the reconstruction stage comprises a spatial registration unit (8) for spatial registering the acquired first and second picture and a temporal registering unit (11) for temporal registering the spatial registered pictures before merging the two spatial and temporal registered pictures.

FIG. 1

FIG. 2

FIG. 3

FIG. 4

Europäisches
Patentamt

European
Patent Office

Office européen
des brevets

## EUROPEAN SEARCH REPORT

**Application Number**

EP 08 30 5710

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/198235 A1 (CHEN SHOU-LUNG [HK] ET AL) 21 August 2008 (2008-08-21) | 1-5,7, 9-13,15 | INV. H04N5/235 G06T5/50 |
| Y | * abstract; figures 1-5 * | 6,8,14, 16 | |
| | * page 1, paragraph 3 - page 4, paragraph 65 * | | |
| | ----- | | |
| X | EP 0 920 196 A (MATSUSHITA ELECTRIC IND CO LTD [JP]) 2 June 1999 (1999-06-02) * abstract; figures 1-5 * | 1 | |
| | ----- | | |
| A | US 2007/025717 A1 (RASKAR RAMESH [US] ET AL) 1 February 2007 (2007-02-01) * the whole document * | 1-21 | |
| A | * page 6, paragraph 110 * | 3 | |
| | ----- | | |
| Y | US 2007/242900 A1 (CHEN MEI [US] ET AL) 18 October 2007 (2007-10-18) * abstract; claim 12; figure 10 * | 6,8,14, 16 | |
| | ----- | | |

**TECHNICAL FIELDS SEARCHED (IPC)**

H04N
G06T

The present search report has been drawn up for all claims

| Place of search | Date of completion of the search | Examiner |
|---|---|---|
| Munich | 27 February 2009 | Dolezel, Tomás |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 08 30 5710

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2009

| Patent document cited in search report | | Publication date | Patent family member(s) | | Publication date |
|---|---|---|---|---|---|
| US 2008198235 | A1 | 21-08-2008 | WO | 2008101379 A1 | 28-08-2008 |
| EP 0920196 | A | 02-06-1999 | AU | 715716 B2 | 10-02-2000 |
| | | | AU | 9407098 A | 10-06-1999 |
| | | | CA | 2252183 A1 | 21-05-1999 |
| | | | CN | 1224973 A | 04-08-1999 |
| | | | DE | 69808024 D1 | 24-10-2002 |
| | | | DE | 69808024 T2 | 18-06-2003 |
| | | | NZ | 332626 A | 28-04-2000 |
| | | | US | 6593970 B1 | 15-07-2003 |
| US 2007025717 | A1 | 01-02-2007 | JP | 2007035028 A | 08-02-2007 |
| US 2007242900 | A1 | 18-10-2007 | NONE | | |

EPO FORM P0459

For more details about this annex : see Official Journal of the European Patent Office, No. 12/82

**REFERENCES CITED IN THE DESCRIPTION**

**Patent documents cited in the description**

- US 7010174 B2